# EUROPEAN PATENT APPLICATION

(11) **EP 4 663 709 A1**
(43) Date of publication of application: **17.12.2025**
(21) Application number: 24305927.6
(22) Date of filing: 12.06.2024
(51) Int. Cl.: C09D 11/52, B82Y 30/00, B82Y 40/00

(54) **USE OF A MULTIDENTATE LIGAND, INK WITH THE LIGAND, METHOD OF PRODUCING THE INK, PROCESSING THE INK INTO THIN FILM, THE THIN FILM AND ITS USES**

(71) Applicant: TOYOTA JIDOSHA KABUSHIKI KAISHA, Aichi-ken, 471-8571 (JP)
(72) Inventor: JOHNSON, Hannah, 1140 Brussels (BE); FELIPE GRACIA, Coral, 1140 Brussels (BE); KINGE, Sachin, 1140 Brussels (BE); WELLS, Rebekah, 1015 Lausanne (CH); DIERCKS, Nicolas Johannes, 1015 Lausanne (CH); SIVULA, Kevin, 1015 Lausanne (CH); YUM, Jun-Ho, 1015 Lausanne (CH); SOARES DE JESUS, Jordann, 1140 Brussels (BE)
(74) Representative: Cabinet Beau de Loménie

(57) **Abstract**

A use of a multidentate ligand (2, 3) for stabilizing dispersed nanoflakes comprising a monolayer of a transition metal dichalcogenide (1).

## Description

### BACKGROUND OF THE INVENTION

### 1. Field of the invention

The present disclosure relates to a method of producing an ink for thin film formation with nanoflakes comprising a mono- or few-layer transition metal dichalcogenide (TMD) using a liquid-liquid interface self-assembly method, an ink obtainable from this method, and a liquid-liquid interface self-assembly method using this ink. The present disclosure also relates to the use of a multidentate ligand within the ink.

### 2. Description of Related Art

For the thin film formation of a mono- or few-layer TMD, CVD (chemical vapor deposition) methods are typically used, as shown e.g. in Son et al., Synthesis and Characterization of Tungsten Amide Complexes for the Deposition of Tungsten Disulfide Thin Films, ACS Omega 2023, 8, 22, 19816-19821. An alternative method for a thin film formation of a TMD is a liquid-liquid interface self-assembly (LLISA) method. An ink with exfoliated flakes through an ultrasonication method is used according to Yu et al., Self-assembled 2D WSe2 thin films for photo-electrochemical hydrogen production, Nat Commun 6, 7596 (2015), hereafter referred to as Literature 1 and incorporated herewith by reference. The document shows the usefulness of the thin film for photo-electrochemical hydrogen production.

The internal quantum efficiency resulting from the produced nanoflakes depends on the exfoliation technique. Electro-exfoliation, also called electrochemical exfoliation, involves a TMD pellet as a working electrode, a counter electrode and an electrolyte comprising an intercalation compound dissolved in a solvent that allows exfoliation of a pellet to form flakes with fewer defects and a higher internal quantum efficiency than the ultrasonication exfoliation method. Sometimes such flakes are addressed by the equivalent term nanosheets in literature. These flakes can be used in the liquid-liquid interface self-assembly as described in reference 1 for a thin film formation of a TMD as shown in
- Wells et al., High Performance Semiconducting Nanosheets via a Scalable Powder-Based Electrochemical Exfoliation Technique, Nano 2022, 16, 4, 5719-5730, hereafter referred to as Literature 2 and incorporated herewith by reference.
The formed nanoflakes by the electro-exfoliation method are monolayers or few layers, thinner than those produced by the ultrasonication method. Therefore, even though the flakes have a higher internal quantum efficiency, the external quantum efficiency is lower due to less light absorption. According to this concept, if subsequent layers are deposited on top of a monolayer of flakes to form a thicker layer, there will be poor electronic conductivity between the layers, so the upper layers are unlikely to contribute to the performance. Carrying out multiple LLISA depositions is not an efficient concept for allowing a deposition of a layered structure.

The formation of stacked sheets from nanoflakes of a transition metal dichalcogenide via intercalation of large ions is shown in Goloveshkin et al., Stabilization of 1T-MoS2 sheets by imidazolium molecules in self-assembling hetero-layered nanocrystals, A. S. (2015), Langmuir, 31(32), 8953-8960. According to this approach ligands and a proton donor are used to form a pre-stacked structure. However, the structure is disadvantageously agglomerated and thus shows a poorly stabilized dispersed state in an ink and is impossible or at least difficult to use in a LLISA method.

### SUMMARY

It is an object of the present invention to allow an efficient provision of highly performant products with a layer of a TMD. It is an object of the present invention to allow the preparation of a sufficiently stable ink that can be used in a LLISA method using this ink to obtain a thin film. The highly performant character of the products and/or an advantage of their production is in particular at least one of
a. controlled lattice spacing (controlled with ligand size) in a layer, specifically in a dispersed flake,
b. shift of band-gap (blue-shifted for the ink, red-shifted for the thin film),
d. controlled photoluminescence intensity,
e. controlled shift to more p-type behavior,
g. enhanced activity for a hydrogen evolution reaction.
In this respect, the present disclosure relates to a method of producing an ink for thin film formation with nanoflakes comprising a monolayer of a TMD using a LLISA method, the method of producing an ink comprising steps of
i) electro-exfoliation with a pellet of a TMD as a working electrode in a solvent, with an electrolyte comprising an intercalation compound, and with voltage applied between the working electrode and a counter electrode,
ii) isolating the TMD nanoflakes exfoliated from the pellet in the electro-exfoliation,
iii) preparing a dispersion of nanoflakes from the isolated TMD in a solvent,
iv) preparing a stable dispersion particularly of stacks of the TMD by adding a proton donor and a multidentate ligand to create a partially stacked dispersion of nanoflakes.

The step of i) electro-exfoliation may be performed as shown in Literature 2. The electro-exfoliation may be preceded by formation of the pellet with operations of pressing a TMD material into a pellet and annealing the pellet. Such operations are exemplified in Literature 2.

The step of ii) isolating may be performed with operations of filtering, washing and drying a powder precipitate from step i).

The step of iii) preparing a dispersion may be performed with operations of sonicating a product isolated with step ii) in a solvent, preferably with a concentration between 3 mg/ml and 35 mg/ml, more preferably between 5 mg/ml and 20 mg/ml. Such operations are exemplified in Literature 2.

According to a particular variant of step of iv) the multidentate ligand and the proton donor are added to provide a molar ratio TMD : multidentate ligand : proton donor of 1 : between 0.55 and 1.05 : between 9 and 11, preferably 1 : between 0.56 and 1 : between 9.5 and 10.5, particularly preferably 1 : between 0.56 and 1 : 10. As the proton donor may be e.g. trimethylammonium chloride. Other possible proton donors include acids e.g. HCl, H₂SO₄, HNO₃ or ammonium or substituted ammonium salts like e.g. trimethylammonium sulfate, trimethylammonium phosphate, trimethylammonium bromide, trimethylammonium iodide.

According to a preference the multidentate ligand may be a light absorber, in particular a visible light absorber. This multidentate ligand may contribute to photo-responsiveness of a thin film obtained from the ink produced according to the method of the invention, in particular when the thin film is one used as a photoanode, a photocathode, a sensor, or a layer of a solar cell.

The multidentate ligands may be selected from the group consisting of a di-, tri-, or tetra-dentate ligand and/or may be selected from at least one of a thiol, an amine, an alcohol or a carboxylic acid. Among them, particularly preferred ligands are the following:

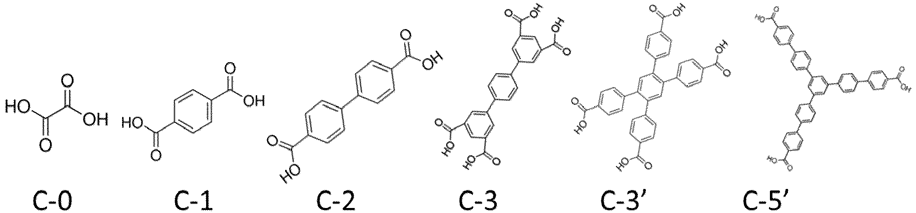

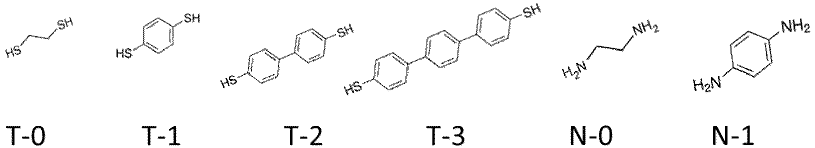

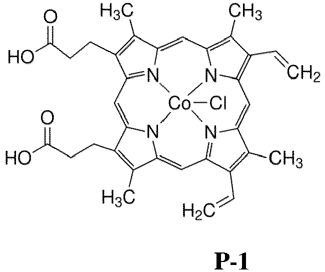

The multidentate ligand which is a light absorber may be a dye molecule or complex and may include a porphyrin structure, in particular a protoporphyrin structure. The complex may comprise a transition metal center in the porphyrin structure and two or more functional ends like e.g. carboxylic acid groups as functional ends at the porphyrin structure. An example and a preferred option for the multidentate ligand which is a light absorber is Protoporphyrin IX cobalt chloride, i.e. the above ligand P1.

The TMD is preferably a disulfide or a diselenide, particular preferably a sulfide. The metal atom of the transition metal in the TMD is preferably at least one selected from the group consisting of Mo, W, Sn and Ta. The TMDs may be an alloy, a p-doped material, an n-doped material, or an ambipolar material. Particularly preferred options are
- TMDs of the formula XY₂, like WS₂, MoS₂, SnS₂, WSe₂, their alloys, like Mo_{0.5}W_{0.5}S₂) and those doped and of the formula XY₂, e.g. TaS₂-doped WS₂,
- n-type TMDs, e.g. WS₂, MoS₂, SnS₂, or of ambipolar character, like Mo_{0.5}W_{0.5}S₂), and
- p-type TMDs, e.g. WSe₂ and TaS₂-doped WS₂.
An ink produced with the invention's method allows the TMDs to be bound by functional ends of ligands of at least bidentate or multidentate (e.g. tridentate (C-5'), tetra-dentate (C-3, C-3')). The functional ends may be thiols, amines, alcohols and carboxylic acids, and their combinations. Preferably the ligand is a di-, tri, or tetra-dentate ligand with only one kind of functional end, i.e. the kind of functional end is then one of a thiol, an amine, an alcohol or a carboxylic acid.

Particularly preferred combinations of ligands and TMDs are as follows:

| | | C-0 | C-1 | C-2 | C-3 | C-3' | C-5' | T-0 | T-1 | T-2 | T-3 | N-0 | N-1 | P-1 |
|---|---|---|---|---|---|---|---|---|---|---|---|---|---|---|
| MoS₂ | n-type, sulfide | X | X | X | X | X | X | X | X | X | X | X | X | X |
| WS₂ | n-type, sulfide | | | X | | X | X | | | X | | | X | |
| MoWS₂ | Ambipolar, sulfide | | | X | | X | X | | | X | | | X | |
| WSe₂ | p-type, selenide | | | X | | X | X | | | X | | | X | |
| SnS₂ | n-type, sulfide | | | X | | X | X | | | X | | | X | |
| Ta doped WS₂ | p-type, sulfide | | | X | | X | X | | | X | | | X | |

A further aspect of the invention is an ink for thin film formation with nanoflakes comprising a monolayer of a transition metal dichalcogenide using a liquid-liquid interface self-assembly method, the ink being obtainable by the above-disclosed method according to the invention. According to the invention a LLISA method, wherein this ink is provided to the interface between two immiscible liquids to form a thin film from the nanoflakes. The LLISA method may be performed as described in Literature 1 but by replacing the ink used according to Literature 1 with the ink of the invention. With this LLISA method the thin film may obtain a thickness of 10 nm or less, preferably 5 nm or less. A thin film obtainable by the method according to the invention's LLISA method is also an aspect of the invention. In the described ink structures of dispersed nanoflakes comprising a monolayer or few layers of a transition metal dichalcogenide (TMD) may show layers of TMD spaced apart from each other by the ligand, in particular in a protonated state. Then dispersed nanoflakes comprising a monolayer of TMD in the ink may be pairs and/or triplets of monolayers or few layers of TMD having the ligand between and its functional end oriented towards them. A TMD monolayer may be formed by the invention's LLISA method in particular with such an ink.

Also an aspect of the invention is the use of the thin film according to the invention as a photoanode, a photocathode, a sensor, a doped layer of a solar cell or a catalyst.

An aspect of the invention is also a use of a multidentate ligand for stabilizing dispersed nanoflakes comprising a monolayer or a few layers of a TMD. The multidentate ligand and/or the TMD may be those described above as options or preferences for the invention's method for producing an ink. Preferably the multidentate ligand is used together with a proton donor. The proton donor is typically an acid and is also present in the above-described step iv) or the above-described ink.

According to the invention the invention's ink and/or the invention's thin film may be prepared such that at least one of the following phenomena 1. to 7. are observable.

### 1. Formation of stacked structures

After mixing the components of the TMD: multidentate ligand: proton donor an obtained ink is left to form an aggregated state. This can enhance light absorption by depositing the aggregated state's material as a 'pre-stacked structure'. This ink is typically stable on the order of 30 mins to 8 hours. This ink may be used in the LLISA deposition process. If the ink is left for a period of 24 - 48 hours, a fully aggregated structure forms which is no longer suitable for LLISA deposition but can be used as a powder for x-ray diffraction, from which the lattice spacing (caused by the protonated ligand) can be determined. In a thin film use for a hydrogen production as addressed in Literature 1 and by increasing the light absorption with the invention's concept, an overall solar-to-hydrogen conversion efficiency can be increased with this aggregated state, whereas each monolayer of the transition metal dichalcogenide would only absorb 5 - 10% of incident solar light.

### 2. Change in light absorption

A shift in optical properties (peak absorption maxima) is observable due to the ligand, and further depending on the length of the ligand used (or the lattice expansion induced by the ligand). The type of shift depends on the state of the flakes. Blue-shift is observed in the ink and red-shift in the thin film, which can be evidenced by UV-vis spectroscopy. Thus the invention is also a concept to control the band-gap which controls the light that is absorbed. To maximize light absorption, often layers of two (or more) semiconductors are used with one absorbing blue light and one red light, for example, to maximize the solar-to-hydrogen conversion efficiency. By tuning the band-gap, it is possible to create an optimal combination - achieving the highest efficiency, which is highly sensitive to the band-gaps of both semiconductors as shown in Döscher et al., Sunlight absorption in water - efficiency and design implications for photo-electrochemical devices, Energy Environ. Sci., 2014, 7, 2951-2956.

### 3. Photoluminescence intensity

The photoluminescence (PL) of the TMD nanoflake film is intensified by the ligand and depends on the type of ligand used (with larger ligands such as above mentioned C3, C3' and C5' showing more than 10 times higher PL intensity). Monolayer TMD nanoflake thin films having low photoluminescence intensity, typically quenched upon forming a layered structure due to the shift from direct to indirect band-gap are shown in Splendiani et al., Emerging Photoluminescence in Monolayer MoS2, Nano Lett. 2010, 10, 4, 1271-1275. The invention's thin film can be part of a sensor so as to improve a conventional photoluminescence applications in sensors, as for example shown for a sensor for H₂O₂ in Alshehri et al., Plasmonic localized heating beyond the diffraction limit via magnetic polariton excitation, J. Appl. Phys. 120, 104503 (2016), for a sensor for dopamine in Xu et al., Thiol-functionalized single-layered MoS2 nanosheet as a photoluminescence sensing platform via charge transfer for dopamine detection, Sens. Actuators B Chem. 246, 380-388 (2017), for sensors for NO₂ and NH₃ in Cho et al., Charge-transfer-based Gas Sensing Using Atomic-layer MoS2, Sci. Rep. 5, 8052 (2015), for a sensor for DNA in Yang et al., Adsorption Behavior of Nucleobases on Doped MoS2 Monolayer: A DFT Study, J. Phys. Chem. C 2016, 120, 20, 11204-11209, for a humidity sensor in Li et al., Ultra-High Sensitivity Humidity Sensor Based on MoS2/Ag Composite Films, IEEE Electron Device Lett., 38, 806-809, (2017), for a sensor for metal ions, such as Al3+ and Fe3+ in Bertran-Vicente et al., Site-Specifically Phosphorylated Lysine Peptides, Chemistry Select 3, 2326 - 2331 (2018), and for a tactile sensor in Park et al., MoS2 -Based Tactile Sensor for Electronic Skin Applications, Adv. Mater. 28, 2556-2562, (2016). Thin films according to the invention may be used for such sensor applications.

### 4. P-type behavior

An increased number of electrons in a p-type material results in a stronger cathodic current for excellent device performance. MoS₂, for example, an intrinsically n-type material, can be combined with ligands in a manner so that the photoluminescence is dominated by the neutral A-exciton relaxation (negatively charged T-Trion relaxation is strongly suppressed), in line with the presence of excess electrons, leading to a more p-type behavior observable by a change in peak shape in relaxation measurements comparing MoS₂ to the ligand-bound MoS₂.

### 5. Direct band-gap stacks

TMD layers in an ink of the invention may be isolated from each other by the ligand and therefore maintain their direct band-gap. In contrast to conventional thin films prepared via CVD a transition to an indirect band-gap, which is less efficient in terms of electron transfer, is then avoided.

### 6. Monolayer stabilization/Spontaneous exfoliation

An ink composed primarily of monolayers, in which however, bilayer and trilayers are also present due to incomplete exfoliation as shown in Literature 2 can be evidenced in the ligand-bound samples by the XRD peak appearing at 14.4°, corresponding to the lattice spacing in crystalline MoS₂. Other XRD peaks (below 7°) can be observed due to the expanded lattice caused by the ligand as a spacer. Accordingly, a distance/spacing between TMD layers in the ink by the ligand can be deduced/calculated from a comparison of peak heights of the ink with and without added ligand and proton donor. In the case of the above ligand T-2, the peak at 14.4° is no longer present. Thus T-2 is a ligand preferable for profiting from an exfoliant activity of the ligand to suppress the presence of multilayers in the ink. This can be relevant, since due to the poor interlayer conductivity, upper layers of the bilayers and trilayers do not contribute significantly to the overall solar-to-hydrogen conversion efficiency as any generated charge is not collected (despite their activity of absorbing light). Therefore, suppressing the presence of these additional layers, which absorb light without being functional, is advantageous in particular for monolayers in transistors and/or sensors.

### 7. Enhanced activity for electrochemical reactions such as a hydrogen evolution reaction

The stacked nanoflakes in the thin film may show enhanced performance for the hydrogen evolution reaction.

As discussed, the invention may profit from the use of a multidentate ligand to create 'pre-stacked' nanoflakes, which are sufficiently stable in an ink to be deposited via the invention's liquid-liquid interface self-assembly method.

The invention's ink is stable enough to be deposited through a LLISA method with the injection of the invention's ink into the interface between two immiscible liquids (such as water and heptane) to prevent the stacking of flakes through the ultra-thin liquid-liquid interface. Once an interfacial ink layer is complete, the top solvent is removed by aspiration and a film floats on the bottom liquid. The bottom liquid is removed through vacuum filtration, so that the invention's thin film is deposited onto the substrate resulting in a high-quality, dense, monolayer nanoflake film. With a conventional ink such a method is shown in Literature 1.

### EXAMPLES

### Materials and equipment

| | |
|---|---|
| Ligands | Oxalic acid (≥99%) (C-0), |
| | Terephthalic acid (98%) (C-1), |
| | Biphenyl dicarboxylic acid (97%) (C-2), |
| | 1,3,5-Tris(4-carboxy[1,1-biphenyl]-4-yl)benzene (C-5') (95%), |
| | 1,2,4,5-Tetrakis(4-carboxyphenyl)benzene (≥98%) (C-3'), |
| | [1,1,4,1]Terphenyl- 3,3,5,5-tetracarboxylic acid (with up to 2 equivalents of DMF) (C-3), |
| | 1,2-Ethanedithiol (≥98%) (T-0), |
| | Benzene-1,4-dithiol (99%) (T-1), |
| | Biphenyl-4,4'-dithiol (95%) (T-2), |
| | p-Terphenyl-4,4"-dithiol (95%) (T-3), |
| | 1,2-Diaminoethane (bioultra) (N-0), |
| | p-Phenylenediamine (≥99%) (N-1) |
| for synthesis | Trimethylammonium chloride |
| TMD | Molybdenum disulfide (powder < 2 µm, 99%) |
| Solvent | 1-Methyl-2-pyrrolidinone (99%) (NMP) |
| electrochemical intercalation medium | Acetonitrile (anhydrous, 99.8%), |
| | Tetraheptylammonium bromide (≥99%), |
| | all purchased from Merck and used without further purification. |
| Photoelectrochemical testing electrolyte (n-type behaviour) | lithium iodide (99%), |
| | tetrabutylammonium fluorophosphate (99%) (TBAFP) |
| Photoelectrochemical testing electrolyte (p-type behaviour) | p-chlroanil |
| | tetrabutylammonium fluorophosphate (99%) (TBAFP) |
| Sonicator | Elmasonic P 30H, Elma Schmidbauer GmbH, 78224 Singen, Germany |
| Centrifuge | Phoenix CD-0412-50 from Phoenix Instrument GmbH, D-30827 Garbsen, Germany |

### TMD pellet preparation

MoS₂ powder or WSe2 powder, respectively, was pressed using a manual Beckman hydraulic pellet press, 12.5 mm diameter die, up to 10 tons and held for 5 s. Up to three 500 mg pellets are vacuum sealed in a fused quartz glass tube with 100 mg sulfur powder ensuring the pellets are not touching to avoid fusing. The pellets are heated from room temperature to 1100°C over 8 hours, held at 1100 °C for 48 hours, then allowed to cool naturally.

### Exfoliation of TMD pellet (electro-exfoliation)

The annealed pellet (approx. 500 mg) was attached as the working electrode using a crocodile clip in a two-electrode set-up with a glassy carbon or graphite rod counter electrode (the electrodes were placed approximately 3 cm apart in a 50 ml beaker). A solution of tetraheptylammonium bromide (5 mg / ml) in acetonitrile was added to the beaker until the pellet was partially submerged (without the crocodile clip touching the electrolyte). A voltage of 9.9V was applied over a period of 2 hours, resulting in the exfoliation of around 200 mg of TMD powder. During the process, the pellet expands and sloughs off to form a precipitate of TMD nanoflakes and a yellow color is seen at the counter electrode due to the formation of bromine.

### Isolating TMD

After 2 hours, the powder was collected from the bottom of the beaker, filtered using a filter paper (Whatman) and washed thoroughly with ethanol. The TMD powder is allowed to dry in air for several hours.

### Dispersion of TMD

The isolated TMD powder is then transferred to a 15 ml centrifuge tube with an amount of NMP corresponding to 5 mg or 20 mg TMD / ml, depending on the desired test. This was then sonicated (Elmasonic P 30H) at 25°C for 2 hours to disperse the TMD flakes in the NMP. Finally, the solution was centrifuged at 400 rpm for 30 mins using a Phoenix (CD-0412-50) centrifuge. The top 80% of the solution is removed and used as a dispersion to be stabilized with ligand and proton donor. In this manner in particular the inks with the following molar ratios TMD : ligand : proton donor were prepared using MoS₂ as TMD, the above illustrated ligand C-2 as the ligand, and trimethylammonium chloride as the proton donor:

| Ink | molar ratio TMD : ligand : proton donor |
|---|---|
| A | 1:1:10 |
| B | 1:0.75:10 |
| C | 1:0.56:10 |
| D | 1:0.42:10 |
| Blank | 1:0: 0 |

These molar ratios are calculated with the amount of TMD added to the ink which may not be fully dispersed to form a stable (stable on the order of 30 minutes to 8 hours) ink with modified optoelectronic properties (specifically a sharpening of the peaks around 435 nm, 670 and 705 nm).

### Film Preparation

The inks were used to form thin films by a LLISA method as described in the prior art (Literature 1 and Literature 2). Thin films were prepared by injecting the TMD ink at the interface between two immiscible solvents (water bottom layer and hexane top layer). Substrates (such as glass or FTO-coated glass) are placed in the water layer. Once sufficient ink has been injected to form a continuous film in the interface (can be seen by eye), the hexane top layer is removed by aspiration. Once the hexane is completely removed, water is removed via vacuum, resulting in a deposition of the film onto the substrates.

### UV vis measurement

UV-Vis spectra were acquired using a Shimadzu UV 3600 spectrometer from 1100 - 300 nm with a step size of 0.1 - 0.5 nm and slit width of 5 nm. Measurements of TMD solutions in NMP were taken using a quartz cuvette directly in transmission mode with NMP used as a reference (automatically subtracted as a background). Here the above inks in A, B, C and D appear as partially stacked structures, which have not yet aggregated to the extent that precipitation occurs. Measurements of thin films were taken in transmission mode using TMD films on FTO-coated glass, with FTO-coated glass as a reference (automatically subtracted as a background).

### X-ray diffraction (XRD) measurements

To measure the XRD patterns of the aggregated structures, the ligand, proton donor and TMD were mixed together in NMP and left (typically for more than 24 hours) until the solution became completely transparent, with the composite forming a soft pellet structure at the bottom of the vial. The excess NMP was removed and the pellet was washed several times with ethanol and allowed to dry on the quartz or silicon plate used for the powder XRD measurement (Rigaku Miniflex 600, Cu k-alpha source) with a step size of 0.02° and a scan rate of 1.5° / min.. Note that the pellet volume is significantly reduced after complete drying (i.e. complete removal of the solvent).

### Raman and Photoluminescence measurements

Raman spectra and PL spectra were obtained using a Horiba Xplora Plus Raman microscope with 532 nm radiation (40 mW). Raman spectra were acquired from 100-1800 cm⁻¹ using a 100x objective, slit of 200 µm, hole of 500 µm, a grating with 2400 gr/mm, 10% filter, 10 s of acquisition, and 6 accumulations. Since the diameter of the excitation beam is large compared to average nanoflake size, the signal observed is an average over many nanoflakes.

### Electrochemical measurement for the hydrogen evolution reaction

TMD films on FTO-coated glass are tested in a three-electrode set-up using a reversible hydrogen reference electrode (Gaskatel) and graphite counter electrode. The electrolyte is 0.5 M H₂SO₄ (pH = 0.3). Linear sweep voltammetry (LSV) measurements (in the dark) are made between 0 and 0.6 V vs. reversible hydrogen electrode at a scan rate of 20 mV / s.

### Photoelectrochemical p-type behavior measurement (TMD thin film operated as photocathode)

TMD films on FTO-coated glass are tested in a three-electrode set-up using a platinum 'pseudo' reference electrode and graphite counter electrode. The electrolyte is a saturated chloranil and 0.1 M NBu₄PF₆ solution using acetonitrile as solvent. Linear sweep voltammetry (LSV) measurements are made between 0.3 and -0.5 V vs. Pt (scanning from 0.3 V and ending at -0.5 V at a scan rate of 10 mV s⁻¹) under chopped light, backside illumination (2s ON, 1s OFF).

### Photoelectrochemical n-type behavior measurement (TMD thin film operated as photoanode)

TMD films on FTO-coated glass are tested in a three-electrode set-up using a platinum 'pseudo' reference electrode and graphite counter electrode. The electrolyte is a saturated 50 mM lithium iodide and 25 mM NBu₄PF₆ solution using acetonitrile as solvent. Linear sweep voltammetry (LSV) measurements are made between -0.3 and 0.5 V vs. Pt (from negative to positive at a scan rate of 10 mV s⁻¹) under chopped light, backside illumination (2s ON, 1s OFF).

### Calculated ligand length and observed lattice constant

The following lengths for above mentioned specific ligands are calculated and the following length of the respective ligand spacers with protonation were observed in XRD measurements:

| **Ligand** | **length of ligand (nm)** | **length of ligand spacer with protonation (nm)** |
|---|---|---|
| T-0 | 0.8 | 1.47 |
| T-1 | 0.88 | 1.50 |
| T-2 | 1.28 | 1.73 |
| N-1 | 0.72 | 1.50 |
| C-1 | 1.01 | 1.51 |
| C-2 | 1.41 | 1.65 |
| C-3 depending on orientation | 1.01 or 1.81 | 1.68 or 2.69 |
| C-5 | 1.01 | 1.46 |
| P-1 depending on orientation | 1.81 | 1.31 or > 2.94 |

The lattice constants for products with the ligands are obtained from the XRD measurements, i.e. as described above evidenced in the ligand bound samples by the XRD peak appearing at 14.4°, corresponding to the lattice spacing in crystalline MoS₂, or the other XRD peak below 7°, respectively to observe due the expansion/spacing of lattices caused by the ligand as a spacer. Accordingly, a distance/spacing between TMD layers in the ink by the ligand are deduced/calculated from a comparison of peak heights of the ink with and without added ligand and proton donor.

### BRIEF DESCRIPTION OF THE DRAWINGS

Results are shown with reference to the accompanying drawings, wherein:
- FIG. 1 shows a plot with the values indicated and observed according the above section 'Calculated ligand length and observed lattice constant'.

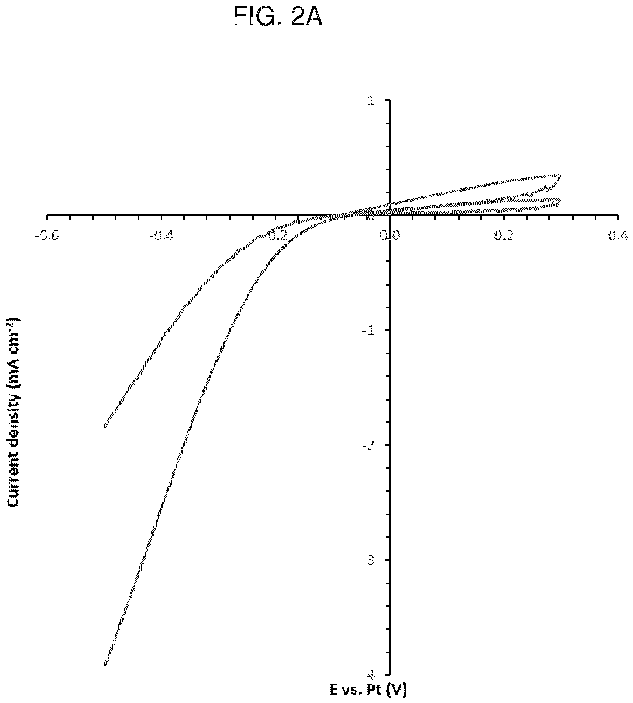

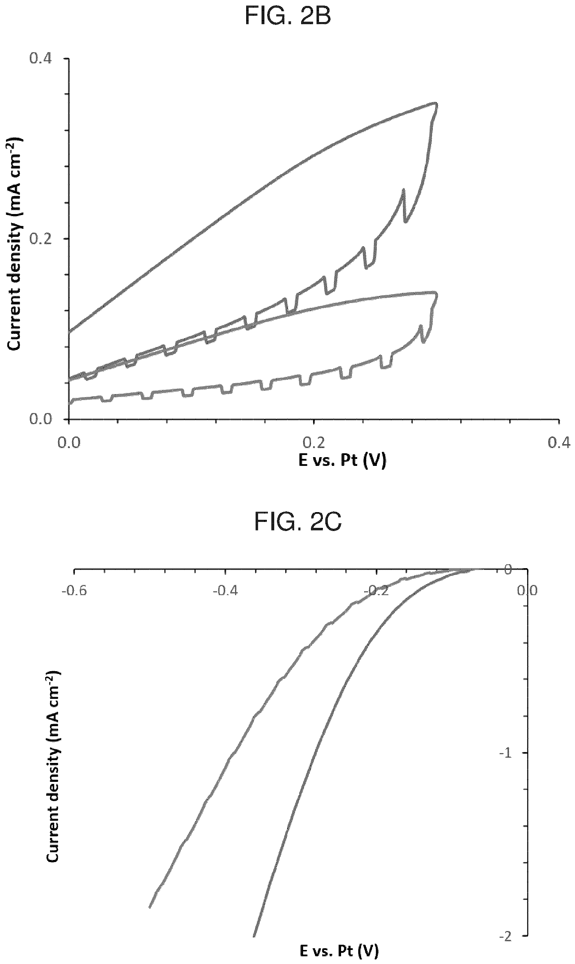

- FIGs. 2A to 2C show the above discussed p-type behavior with TMD films measured as photocathodes, as described above, with the measurement result at various scales and for a thin film from a dispersion (ink) without ligand with the curve rightmost in the region of negative ordinate and abscissa values and lowermost in the region of positive ordinate and abscissa values and for a thin film from this dispersion (ink) with the ligand N-1 and proton donor with the curve leftmost in the region of negative ordinate and abscissa values and uppermost in the region of positive ordinate and abscissa values,
- FIGs. 3A to 3E show above indicated UV-vis measurements for inks A to D and blank in the order in which these inks are listed above, and
- FIG. 4 schematically illustrates a stack in an ink according to the invention.
- FIGs. 5 and 6 show results of above described photoluminescence measurements with wavelengths on the abscissa and intensities ion the ordinate.
- FIG. 7 shows results of above described electrochemical measurement.
- FIG. 8 shows a photoelectrochemical measurement with TMD films measured as photoanodes, as described above (as n-type behavior) for a thin a film from a dispersion (ink) without ligand with the curve showing lower current densities around 0.0 V and higher current densities at between 0.2 and 0.5 V and for a thin a film from a dispersion (ink) with the ligand T-2 and proton donor showing higher current densities around 0.0 V and lower current densities at between 0.2 and 0.5 V,

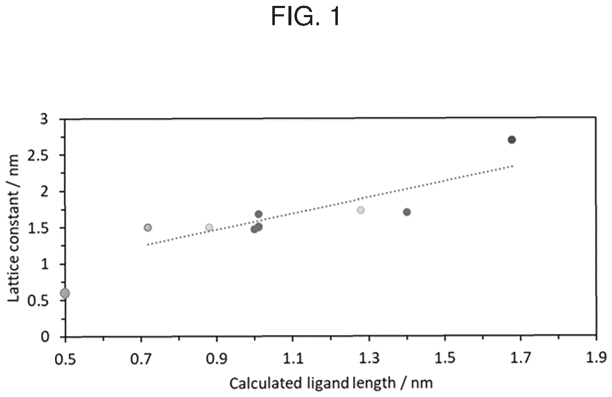

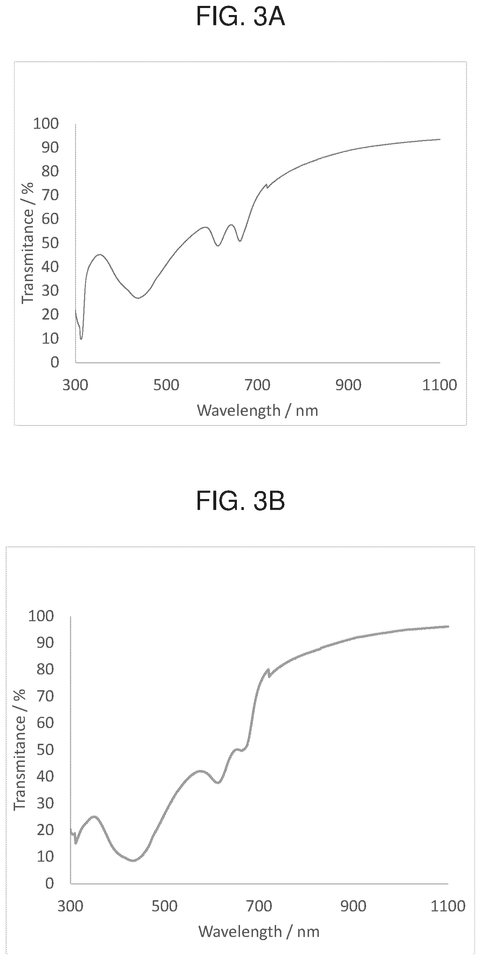

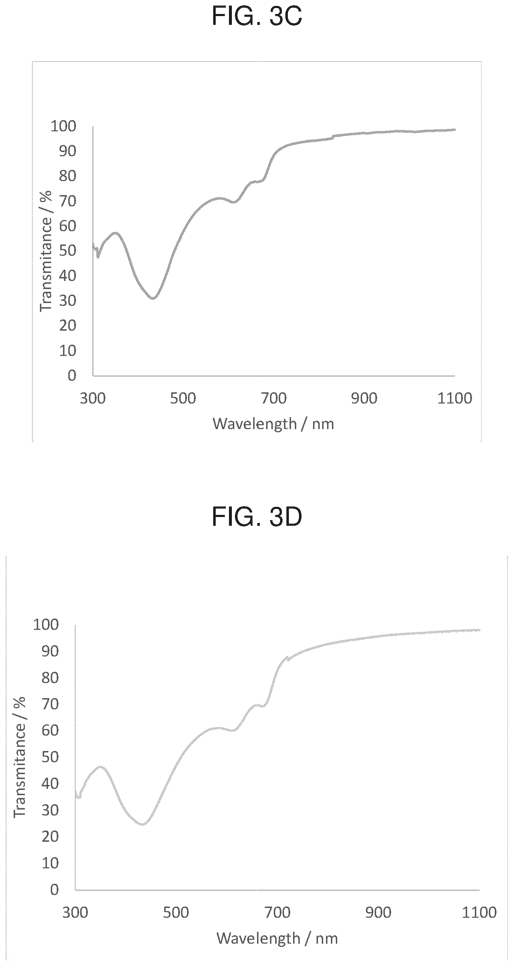

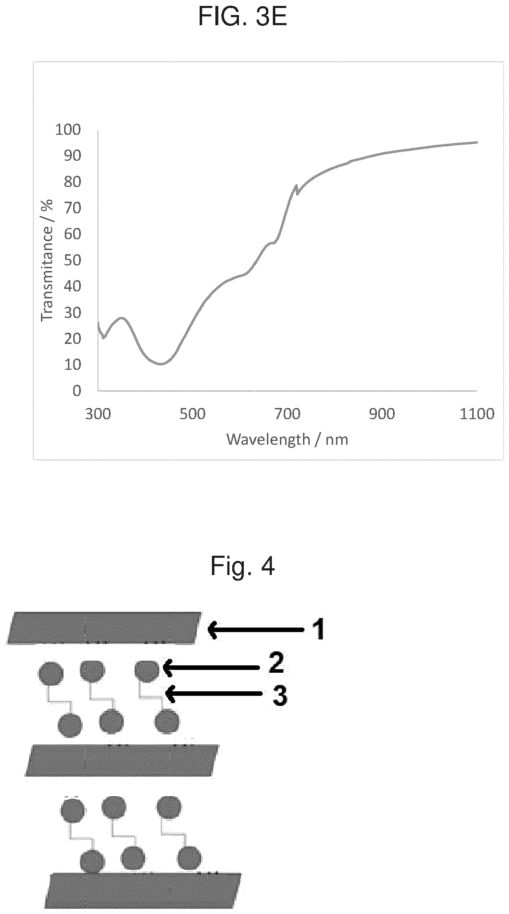

A convincing correlation between calculated ligand length and observed lattice spacing is apparent from Fig. 1. The impact of a ligand with proton donor in an ink of the invention on a voltage-current characteristic is apparent from FIGs. 2A to 2C. These figures demonstrates the use of the TMD (MoS₂) thin films (with, exemplified with protonated ligand N-1, or without ligands) as photocathodes. Controllability of absorption characteristics by the choice of a ligand is apparent from FIGs. 3A to 3E. As illustrated in Fig. 4 according to the invention's concept described above TMD monolayers or few layers 1 are spaced apart from each other by a ligand having functional groups 2 at both ends of its base structure 3, i.e. a di-dentate ligand in the exemplary and schematic illustration in Fig. 4 which shows a trilayer stack. In this trilayer stack and not shown in Fig. 4 protons from the proton donor added in the ink are at an interface between TMD and ligands. Few layers may e.g. be two or three layers.

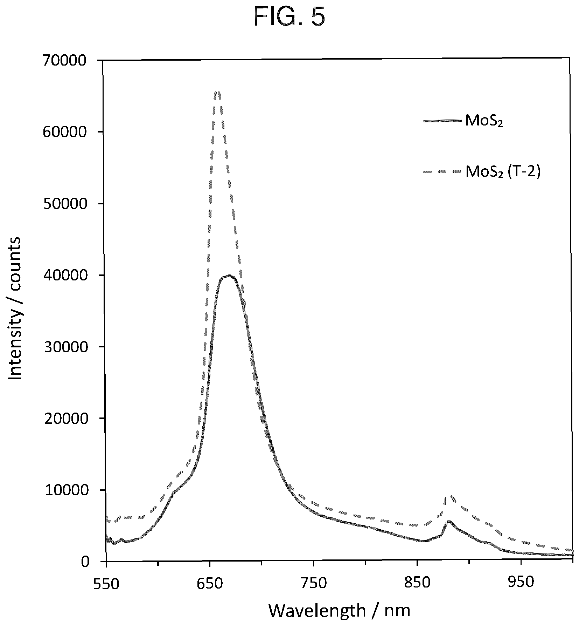

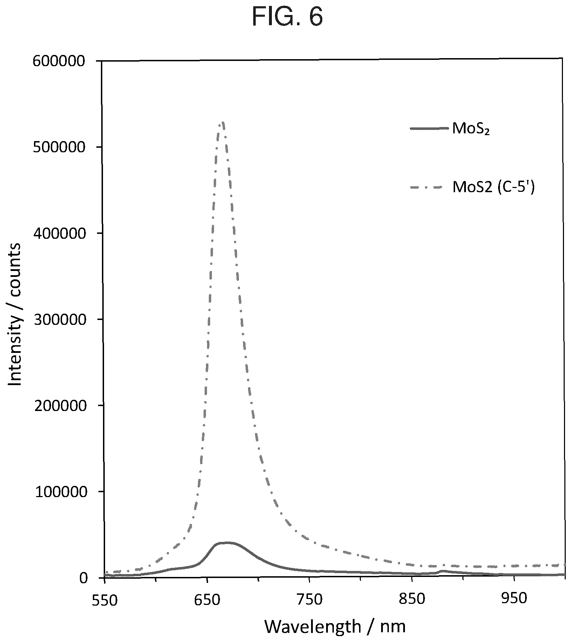

FIGs. 5 and 6 show the photoluminescence measurement curves from samples prepared in line with those described with regard to FIGs 2A to 2C, namely a thin film from the dispersion without ligand and a thin film from a dispersion with ligand and proton donor prepared in the same manner described with regard to FIGs 2A to 2C except that the above mentioned ligand T-2 or C-5', respectively was used instead of N-1. Thin films were prepared by the LLISA method for the TMD inks and TMD: multidentate ligand: proton donor inks, as previously described. The measurement curve for the thin film without ligand is shown as a continuous line in FIGs. 5 and 6. The measurement curve for a thin film from the dispersion with ligand T-2 is shown as a broken line in FIG. 5 and that for a thin film from the dispersion with ligand C-5' is shown as a broken line in FIG. 6. Accordingly photoluminescence is significantly intensified when a ligand, in particular with protonation, is used. By converting the wavelengths values in nm from such into energy value in eV related curves to evidence p-type behavior can be obtained, wherein a suppression of T-exciton relaxation is indicative of p-type behaviour (cf. J.W. Christopher, Long tailed trions in monolayer MoS2: Temperature dependent asymmetry and resulting red-shift of trion photoluminescence spectra, Scientific Reports volume 7, Article number: 14062 (2017), https://doi.org/10.1038/s41598-017-14378-w). The inventors found that while MoS₂ is an intrinsically n-type material its combination with ligands results in a photoluminescence dominated by the neutral A-exciton relaxation (negatively charged T-Trion relaxation being strongly suppressed), suggesting the presence of excess electrons to provoke p-type behavior. This behavior was confirmed for all above exemplified ligands and evidenced by a change in the peak shape comparing MoS₂ to the ligand bound MoS₂ dispersion samples.

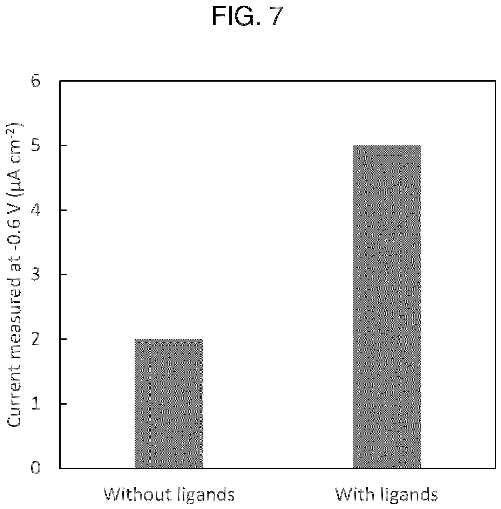

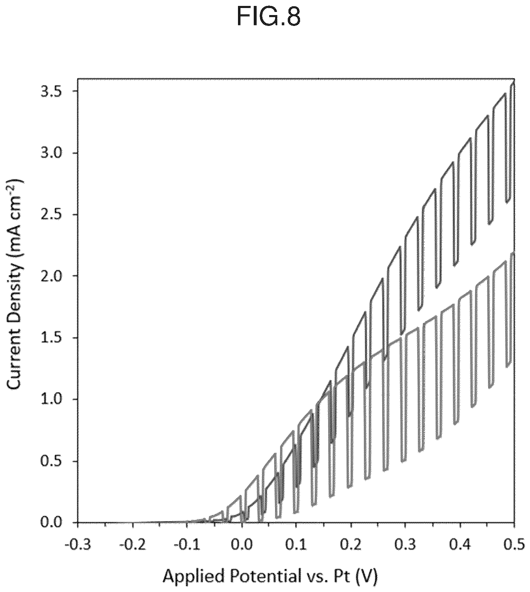

WSe₂ film preparations have been performed. Inks used for this purpose samples were prepared in line with those described with regard to FIGs 2A to 2C, namely the dispersion without ligand except that WSe₂ was used as TMD instead of MoS₂ and a dispersion with ligand and proton donor prepared in the same manner described with regard to FIGs 2A to 2C except that WSe₂ was used as TMD instead of MoS₂ and ligand N-1 was used. In line with the above described electrochemical measurement for the hydrogen evolution reaction these samples were subjected to current measurements as - 0.6V. As results FIG. 7 shows currents in µA cm² for the sample without ligand as the column on the left side and sample with the ligand N-1 as the column on the right side. FIG. 8 demonstrates the use of the TMD (MoS₂) thin films (with, exemplified with protonated ligand T-2, or without ligands) as photoanodes.

Although the present disclosure refers to specific examples, modifications may be provided to these examples without departing from the general scope of the invention as defined by the claims. In particular, individual characteristics may be combined in additional embodiments.

## Claims

1. A method of producing an ink for thin film formation with nanoflakes comprising a monolayer of a transition metal dichalcogenide (1) using a liquid-liquid interface self-assembly method, the method of producing an ink comprising steps of
- electro-exfoliation with a pellet of a transition metal dichalcogenide as a working electrode in a solvent and with an electrolyte comprising an intercalation compound,
- isolating the transition metal dichalcogenide exfoliated from the pellet in the electro-exfoliation,
- preparing a dispersion of nanoflakes from the isolated transition metal dichalcogenide in a solvent,
- preparing the dispersion of the transition metal dichalcogenide by adding a proton donor and a multidentate ligand (2, 3) for stabilizing the dispersion of nanoflakes.

2. The method according to claim 1, wherein the multidentate ligand (2, 3) and the proton donor are added to provide a molar ratio transition metal dichalcogenide : multidentate ligand : proton donor of 1 : between 0.55 and 1.05 : between 9 and 11.

3. The method according to claim 1 or 2, wherein the multidentate ligand (2, 3) is a di-, tri-, or tetra-dentate ligand.

4. The method according to any of claims 1 to 3, wherein the ligand is a visible light absorber being a dye molecule or a complex.

5. The method according to any of claims 1 to 4, wherein the transition metal dichalcogenide is an alloy, a p-doped material, an n-doped material, or an ambipolar material.

6. An ink for thin film formation with nanoflakes comprising a monolayer of a transition metal dichalcogenide (1) using a liquid-liquid interface self-assembly method, the ink being obtainable by the method according to any of claims 1 to 5.

7. A liquid-liquid interface self-assembly method, wherein the ink according to claim 6 is provided to the interface between two immiscible liquids to form a thin film from the nanoflakes.

8. The liquid-liquid interface self-assembly method according to claim 7, wherein the thin film has a thickness of 10 nm or less.

9. A thin film obtainable by the method according to claim 7 or 8.

10. A use of the thin film according to claim 9 as a photoanode, a photocathode, a sensor, a doped layer of a solar cell or a catalyst.

11. A use of a multidentate ligand (2, 3) for stabilizing dispersed nanoflakes comprising a monolayer of a transition metal dichalcogenide (1).

12. The use according to claim 11, wherein the multidentate ligand (2, 3) is a di-, tri-, or tetra-dentate ligand.

13. The use according to claim 11 or 12, wherein the ligand is a visible light absorber being a dye molecule or a complex.

14. The use according to any of claims 11 to 13, wherein the multidentate ligand (2, 3) is used together with a proton donor.

15. The use according to any of claims 11 to 14, wherein the transition metal dichalcogenide is an alloy, a p-doped material, an n-doped material, or an ambipolar material.

## Amended claims

### Amended claims in accordance with Rule 137(2) EPC.

1. A method of producing an ink for thin film formation with nanoflakes comprising a monolayer of a transition metal dichalcogenide (1) using a liquid-liquid interface self-assembly method, the method of producing an ink comprising steps of
- electro-exfoliation with a pellet of a dichalcogenide of at least one metal selected from the group consisting of Mo, W, Sn, and Ta and being a disulfide or a diselenide as a working electrode in a solvent and with an electrolyte comprising an intercalation compound,
- isolating the dichalcogenide exfoliated from the pellet in the electro-exfoliation,
- preparing a dispersion of nanoflakes from the isolated dichalcogenide in a solvent,
- preparing the dispersion of the dichalcogenide by adding a proton donor and a multidentate ligand (2, 3) for stabilizing the dispersion of nanoflakes, wherein the multidentate ligand (2, 3) is at least one selected from the following ligands C-0, C-1, C-2, C-3, C-3', C-5', T-0, T-1, T-2, T-3, N-0, N-1, and P-1:

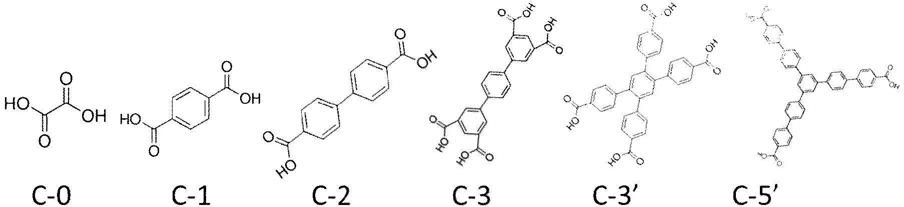

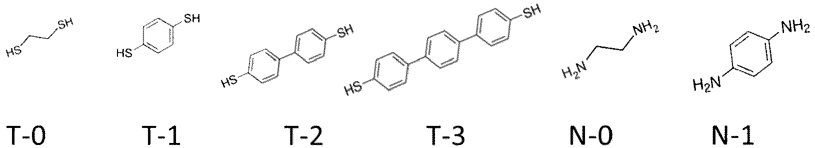

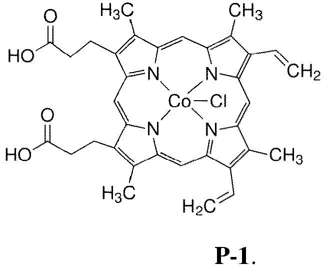

2. The method according to claim 1, wherein the multidentate ligand (2, 3) and the proton donor are added to provide a molar ratio dichalcogenide : multidentate ligand : proton donor of 1 : between 0.55 and 1.05 : between 9 and 11.

3. The method according to claim 1 or 2, wherein the multidentate ligand (2, 3) is the ligand P-1.

4. The method according to any of claims 1 to 3, wherein the dichalcogenide is an alloy, a p-doped material, an n-doped material, or an ambipolar material.

5. An ink for thin film formation with nanoflakes comprising a monolayer of a dichalcogenide (1) of at least one metal selected from the group consisting of Mo, W, Sn, and Ta and being a disulfide or a diselenide and for a liquid-liquid interface self-assembly method providing the thin film, wherein the ink is obtainable by the method according to any of claims 1 to 4.

6. A liquid-liquid interface self-assembly method, wherein the ink according to claim 5 is provided to the interface between two immiscible liquids to form a thin film from the nanoflakes.

7. The liquid-liquid interface self-assembly method according to claim 6, wherein the thin film has a thickness of 10 nm or less.

8. A thin film obtainable by the method according to claim 6 or 7.
